# EUROPEAN PATENT APPLICATION

(11) **EP 0 922 479 A1**
(43) Date of publication of application: **16.06.1999**
(21) Application number: 98830556.1
(22) Date of filing: 23.09.1998
(51) Int. Cl.: B01D 46/04

(54) **A blower device for cleaning dust filters**

(30) Priority: 28.11.1997 IT MO970219
(71) Applicant: WAM S.p.A., 41030 Ponte Motta Cavezzo (Modena) (IT)
(72) Inventor: Almasio, Vittorio, 20063 Cernusco sul Naviglio (MI) (IT); Marchi, Germano, 41030 Ponte Motta Cavezzo (MO) (IT); Ramponi, Sandro, Località Porotto, 44100 Ferrara (FE) (IT)
(74) Representative: Gotra, Stefano

(57) **Abstract**

A blower device for cleaning dust filters comprises a tank containing pressurised air destined to be sent on to a filtering surface of a dust filter, passing through an obturator (10) which during normal filter operation is closed and which is periodically opened on command to send compressed air on to the filtering surface. A regulation screw (26) operates on the obturator (10) as a limiter, a position of which is adjustable.

## Description

The invention relates to a blower device for cleaning dust filters.

Specifically but not exclusively the invention can be used for cleaning dry dust filters having a plurality of filtering elements. A possible application of these dust filters is in silos, for example silos containing cements, concrete or the like, or silos of granaries.

During normal use, the filtering walls of a dust filter are crossed, from the outside towards the inside, by air needing filtering. By passing through the filter walls the dust granules suspended in the air are stopped by the walls and deposit thereon, which leads to a need for the walls to be cleaned periodically to free them from the granules, so that their filtering capacity can be restored. The blower device of the invention serves this purpose.

In particular reference is made to a device of the type comprising a source of compressed air destined to act on a filtering surface of a dust filter through an obturator which during normal filter use is closed and which is opened periodically when the filtering surface is to be cleaned off, and which when opened sends a flow of compressed air on to said filtering surface. This blowing action causes the granules stuck on the filtering surface to detach, not only due to the shaking action imparted on the filters, but also due to the action of the air, which is usually blown in an opposite direction to the air containing the dust.

The prior art teaches a device of the above-described type, for example FR 2 593 410, in which the obturator is a diaphragm commanded by a normally de-energised solenoid ; when the filter has been in use for a certain time period, the blower device is called into action, usually automatically, by energising the solenoid, which opens the diaphragm obturator and thus places the pressurised air canister in communication with the filtering surface, the air thus injected having a cleaning action on the filters by detaching the dust particles.

Effective functioning of a blower device for cleaning filters also depends on the quantity of pressurised air sent to the filter at each solenoid excitation: the quantity of air must be sufficient each time to detach the dust from the filtering surface, because a less-than-sufficient quantity would lead to inefficient device functioning.

To guarantee filter cleaning, prior-art blower devices are structured and dimensioned so that each time they operate they send out a relatively high quantity of air, generally excessive with respect to what is strictly necessary, so that there is a considerable consumption of compressed air with a consequent increase in filter operating costs.

A further drawback consists in the fact that known devices for filter cleaning cause rapid wearing of the filtering surfaces. This is mainly due to the fact that in most cases the pressurised air hitting the filters does so quite violently, which most times is excessive since it determines a stronger impact than what is indispensable for obtaining the necessary removal of the dust particles.

The main aim of the present invention is to obviate the above-mentioned drawbacks by making available a blower device for cleaning dust filters which offers a considerable saving in terms of pressurised air.

A still further aim of the invention is to provide a blower device for cleaning dust filters which during functioning causes a minimum of wear on the filtering surfaces it acts on.

An advantage of the invention is that it provides a device wherein the quantity of pressurised air which has periodically to be sent to the filter can correspond to the minimum quantity sufficient for detaching the dust particles, thus considerably reducing waste of the pressurised air.

A further advantage is that it increases the filtering surface working life.

A still further advantage is that it provides a cleaning device that can be applied on any type of dust filter while obtaining a reduction in the waste of pressurised air used, and that the cleaning device can be used for any type of polluted atmosphere to be purified.

A yet further advantage is that the blower device of the invention can be realised by making only few and simple modifications to existing devices. Further, the device made according to the invention is very simple and immediate to use.

The aims and advantages and others besides are all attained by the device of the invention, as it is characterised in the following claims.

Further characteristics and advantages of the present invention will better emerge from the detailed description that follows of a preferred but non-exclusive embodiment of the invention, illustrated purely by way of a nonlimiting example in the accompanying figures of the drawings, in which:

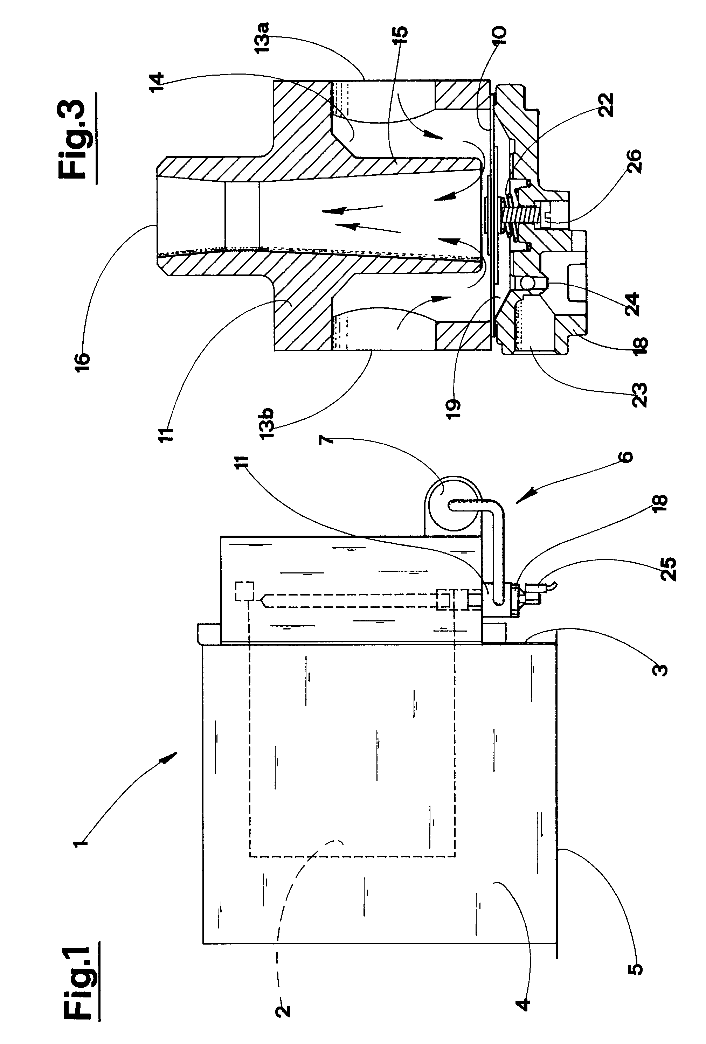

figure 1 is a schematic vertical-elevation side view of a sleeve filter with the device of the invention applied thereto;
figure 2 is a side view from the right of figure 1;
figure 3 shows a sectioned detail of figure 2 in enlarged scale;

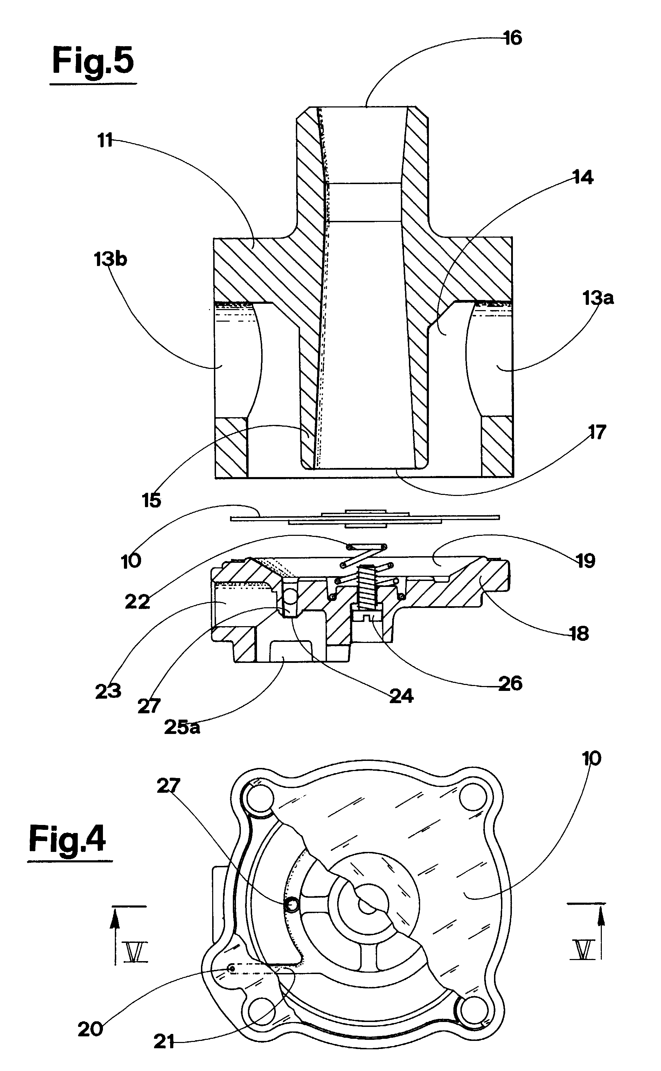

figure 4 shows a view from above of figure 3, without the valve 11 and with some parts removed better to evidence others;
figure 5 is an exploded view of figure 3;

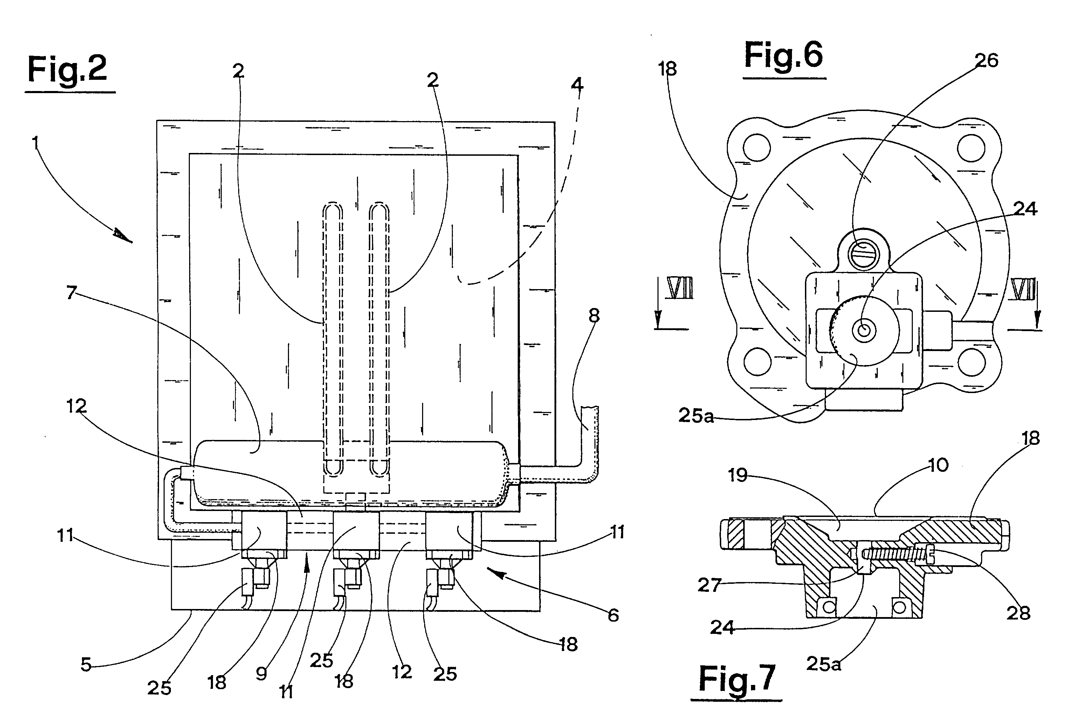

figure 6 is a view from below of figure 3;
figure 7 is a section made according to line VII-VII of figure 6.

With reference to the figures of the drawings, 1 denotes a dry dust filter. The filter 1 exhibits a plurality of filtering elements 2, which in the illustrated example are six in number and are of the sleeve type. The various filtering elements 2 are associated to one plate 3 which separates the polluted atmosphere from the purified atmosphere. The walls of the filtering elements 2 are in fact the filtering surfaces. The filter 1 is further provided with a suction device, of known type and not illustrated, through which the purified air passes after having crossed the filtering surfaces. The filtering elements 2 are situated in a chamber 4 provided with an aperture 5 through which the air to be filtered enters into the filter 1.

The air passes through the filtering surfaces and is purified, depositing the dust particles on the filtering surfaces. Periodic cleaning of the filtering elements 2 is done by a blower device 6, made according to the invention and described herein below.

The blower device 6, which operates periodically, comprises a pressurised air source which in the example is a tank 7 kept full of compressed air at a predetermined pressure. 8 schematically denotes a compressed air supply maintaining the tank 7 at the desired pressure. The tank 7 feeds the pressurised air to a manifold 9 associated to three obturators 10, through which the tank 7 can be placed in communication with the filtering elements 2. In the case in point each obturator 10 is operatively associated to two filtering elements 2.

The manifold 9 comprises a plurality of internally hollow modular elements, located one behind another and inter-communicating. In the example these elements are constituted by three valve elements 11, each of which is associated to a respective obturator 10, which elements 11 inter-communicate by means of two intermediate connecting elements 12. Each valve element 11 exhibits two lateral mouths 13a and 13b, located opposite to one another, through which the internal cavities 14 in the modular elements 11 and 12 inter-communicate so as to give rise to a single manifold 9 for the pressurised air. Each valve element 11 has at its centre a tubular body 15 exhibiting at opposite ends thereof two openings. A first opening 16 of the tubular body is connected in a known way to two filtering elements 2 associated to the relative valve element. An obturator 10 operates on the second opening 17 of the tubular body 15; in the illustrated example the obturator is of the diaphragm type. The pressurised air is destined to act on the various filtering surfaces of the filter 1 through the obturators 10.

During normal use of the filter, the various obturators 10 are closed and destined to be periodically opened on command to send compressed air from the tank 7 to the relative filtering surfaces 2.

Each obturator 10 is arranged between the relative valve element 11 and a valve body 18. A chamber 19 is described between the obturator 10 and the valve body 18, which chamber 19 communicates with the internal cavity 14 of the relative valve element (i.e. with the manifold 9 held at the same pressure as the tank 7) through a hole 20 made in the obturator 10 itself and through a channel 21 afforded in the valve body 18. A spring 22 is predisposed in the chamber 19, which spring 22 pushes the obturator 10 into the closed position. The above-mentioned chamber 19 can be connected to a discharge 23, for example at atmospheric pressure, by means of an orifice 24 which is normally closed, for example by means of a solenoid vale 25 of known type. 25a denotes the connection for the valve body 18 to the solenoid 25, not illustrated in figures from 3 onwards. Thus in the chamber 19 there is normally a high air pressure, about equal to the pressure in the internal cavity 14 of the valve element 11. In this situation the obturator 10 is normally closed, preventing any communication between the manifold 9 of the pressurised air and the filtering elements 2.

When the orifice 24 is opened, the chamber 19 is placed in communication with the discharge 23, and the pressure in the chamber 19 drops, opening the obturator 10 and consequently sending pressurised air on to the filtering surfaces 2.

The blower device 6 comprises means for regulating the quantity of compressed air to be sent each time to the various filtering surfaces. These means for regulating the quantity of pressurised air comprise, in association with each obturator 10, an adjustable obturator limiter. In the present embodiment the limiter is a first regulating screw 26.

The first screw 26 controls the maximum obturator 10 aperture: this is substantially the distance of the obturator 10 from the second opening 17 when the former is completely open. To carry out this regulation it is sufficient to screw in or unscrew the first regulation screw 26 so as to near it or distance it to or from the obturator 10.

The device 6 further comprises means for regulating the speed of opening and/or closing the obturator 10. In the illustrated example, wherein the obturator 10 aperture is controlled by setting a side of the obturator itself in communication with the discharge 23, the means for regulating the speed of aperture and/or closure of the obturator can be realised by at least one conduit 27 setting the obturator 10 in communication with the discharge 23; the passage section of the conduit 27 being variable on command. In this case the conduit 27 exhibits at one end the orifice 24 on which the solenoid 25 acts. The variation in the passage section of the conduit 27 can be realised by means of a second regulation screw 28. An end of the second regulation screw 28 is predisposed at least partially to obstruct the conduit 27 by regulation. By screwing or unscrewing the screw 28 the passage section can be reduced or increased.

Both regulation screws 26 and 28 can be actuated externally by an operator, for example with a common screwdriver.

The functioning of the device will now be briefly described.

After the filter has been in use for a certain time, during which the filtering elements 2 do not communicate with the pressurised air tank 7, the various solenoids 25 are excited, usually automatically, so that the relative orifices 24 are opened, which causes the raising of the diaphragm obturators 10 and thus the opening of the communication channel between the tank 7 and the filtering elements 2. The pressurised air then flows, through the manifold 9, from the tank 7 to the filtering surfaces 2, causing the desired removal of dust. Then the solenoids 25 close the relative orifices 24 so that the obturators 10 return into the position of closure.

By acting on the first or second regulation screw 26 or 28, or both, a situation can be created in which the filters are effectively cleaned with only a relatively small quantity of air, and without shaking the filters excessively.

In particular, by acting on the second regulation screw 28, it is possible to regulate the violence of the impact of the air on the filtering surfaces so as to cause a true and proper detachment of the dust from the surfaces with the least possible aggression on the surfaces themselves. By reducing the passage section of the conduit 27, the time the obturator 10 takes to open completely is made correspondingly longer, thus reducing the impact effect of the air on the surfaces. Conversely, by increasing the passage section of the conduit 27, the violence of the air impact is increased.

The means for controlling the speed of aperture of the obturator, which in the example vary the passage section between the chamber 19 and the discharge 23, mean that the obturator can be opened more or less gradually. The regulation of the speed of aperture controls the jet of air which strikes the filtering surfaces, and in this way the jet, having the minimum possible energy, inflicts the minimum possible wear on the surfaces.

The device of the invention also enables the quantity of air periodically sent on to the filtering surfaces to be changed. For each excitation of the solenoid, the minimum quantity of air needed to detach the powders from the filtering surfaces can be jetted, with no surfeit. As is well known, the quantity of air needed is connected to the type of environment the filters are working in, and is especially influenced by the type of powder to be filtered, its granulometry, the amount of pollution, humidity and the temperature of the air to be purified, and by other parameters too.

The filter cleaning device is prepared so that the air sent each time to free the filter from the powder is correctly dosed. The setting of this correct dosage is done simply and immediately, by screwing or unscrewing the first or the second regulation screw, or even both screws, until the satisfactory regulation is found. The setting can be repeated each time that the polluted environment in which the filter operates changes, such as, for example, when the filters are used in silos, each time the characteristics of the material contained in the silo are changed.

The blower device can be applied, as in the above-described case, to a filter provided with a plurality of filtering surfaces. During use each single filtering surface can work in an operative situation which is different from that of the other filtering surfaces, so that the quantity of pressurised air necessary for an effective cleaning operation can be set differently from surface to surface. This does not represent a problem inasmuch as the flow of pressurised air reaching the surface can be regulated independently for each filtering surface.

Good results can also be achieved using a blower device which has only the first regulation screw, but not the second, or vice versa. In other words, the means for regulating the speed of obturator aperture and closure and the means for regulating the quantity of compressed air to be sent each time to the filtering surfaces can be used either in combination, or independently one from another.

A blower device in which the speed of closure of the aperture can be varied controlledly could also be realised, instead of the speed of opening thereof, as in the illustrated example.

## Claims

1. A blower device for cleaning dust filters, comprising a source of compressed air destined to strike a filtering surface of a dust filter (1) by passing through an obturator (10) which is closed during normal operation of the filter (1) and which is periodically opened on command to send compressed air on to the filtering surface, characterised in that it comprises means for regulating the quantity of compressed air which can be sent at each opening of said obturator on to the filtering surface.

2. The device of claim 1, characterised in that said means for regulating the quantity of pressurised air comprise a limiter for the obturator (10), a position of which limiter can be regulated.

3. The device of claim 2, characterised in that said limiter consists of a first regulation screw (26).

4. A blower device for cleaning dust filters, as in any one of the preceding claims, comprising a source of compressed air destined to strike a filtering surface of a dust filter (1) by passing through an obturator (10) which is closed during normal operation of the filter (1) and which is periodically opened on command to send compressed air on to the filtering surface, characterised in that it comprises means for regulating the speed of aperture and/or closure of the obturator (10).

5. The device of claim 4, wherein the opening of obturator (10) is commanded by connecting the obturator (10) to a discharge (23), characterised in that said means for regulating the speed of aperture and/or closure of the obturator (10) comprise at least one conduit (27) which places the obturator (10) in communication with the discharge (23), a section of passage of said conduit (27) being variable on command.

6. The device of claim 5, characterised in that the variation of the section of passage of the conduit is realised by means of a second regulation screw (28).
